# EUROPEAN PATENT APPLICATION

(11) **EP 2 180 111 A1**
(43) Date of publication of application: **28.04.2010**
(21) Application number: 08253411.6
(22) Date of filing: 21.10.2008
(51) Int. Cl.: E04C 1/41, C04B 14/06, E04B 1/76, E04B 2/02

(54) **Thermally insulated building brick**

(71) Applicant: Rockwool International A/S, 2640 Hedehusene (DK)
(72) Inventor: The designation of the inventor has not yet been filed
(74) Representative: Samuels, Lucy Alice

(57) **Abstract**

A thermally insulated building brick (1) and a method for production thereof, wherein the brick (1) comprises a structural body (2) with at least one cavity (8) with inner cavity surfaces (11) and an insulating filling (3) arranged in the cavity (8). To provide a brick (1) with high insulation value the insulating filling (3) comprises mineral fibres (5) and a silica-based thermal insulator (4), said insulating filling (3) being arranged to be in direct contact with the inner cavity surfaces (11).

## Description

The invention relates to a thermally insulated building brick, which brick comprises a structural body with at least one cavity with inner cavity surfaces and a thermally insulating filling arranged in the cavity.

Although new building materials and building methods have been introduced in the past decades, traditional building bricks are still used and valued. A disadvantage of ordinary building bricks is however that the thermal insulating value is mediocre, which with increasing cost of energy and focus on environment is a major disadvantage. Different attempts have been made to improve the insulation value of building bricks.

At present there are several types of thermally insulated building bricks available on the market. One of these bricks is the Unipor Coriso, which is a brick filled with mineral granulate, and an example of a mineral wool filled brick is known under the trade name MZ8 from Mein Ziegelhaus. Other examples include bricks with a filling of perlite (e.g. Poroton-T8/ -T9 from Wienerberger).

Patent literature does also include different concepts for thermally insulated building bricks. One example can be found in GB patent no. 461,314, which relates to a brick filled with a thermally insulating filling, such as glass wool. This is a traditional building brick filled with traditional insulation materials at the time of filing of this patent more than 80 years ago, and this brick does not meet the demands for modern building bricks in terms of insulation properties.

A more modern example is the building brick according to EP 1 752 593 A2. This building brick has a substantially cubic body comprising a plurality of cavities divided by walls and filled with insulating filling. This prior art building brick does provide state of the art insulation properties, but cannot meet future demands on insulation properties.

DE 20 2007 013 074 U1 discloses vacuum insulation panels having very high insulation value. The vacuum insulation panel comprises a micro-porous core material e.g. a silica-aerogel, possibly with reinforcing fibres, such as inorganic fibres e.g. mineral wool fibres. The core material is arranged in a wrapping, evacuated and provided with an air-tight metal casing, such as an aluminium foil. It is mentioned, but not otherwise supported that the panels can be mounted in cavities of a hollow brick. The resulting brick has a high insulation value, but it is, however, an expensive solution and not suited for mass production. Further the vacuum insulation panel is fragile and subject to damage during mounting in the relatively narrow cavities of a hollow brick. The wrapping and foil could for example easily be scratched, whereby the vacuum would be lost and the insulation properties reduced. Such likely damages to the insulation panel will destroy or reduce the insulation properties of the brick. Conventionally such vacuum insulation panels are filled with aerogel for the aerogel to function as an air-absorbent, which will, however, reduce the insulation value of the panel over time.

An object of the invention is hence to provide an alternative building brick having high thermal insulation value.

This object is achieved with a building brick according to the introduction, wherein the insulating filling comprises mineral fibres and at least one silica-based thermal insulator selected from the group consisting of aerogel, fumed silica and precipitated silica, said insulating filling being arranged to be in direct contact with the inner cavity surfaces. By direct contact should be understood that no voids or additional material, e.g. a foil or membrane, separates the insulating material from the inner cavity surfaces of the brick, meaning that substantially the whole area of all the inner cavity surfaces is covered by insulating material.

Hereby a brick with high insulation value is achieved, in that the insulating material contains at least one silica-based thermal insulator selected from the group consisting of aerogel, fumed silica and precipitated silica, which are materials with very high insulation value as will be discussed below, and further in that the insulating material has direct contact with the inner cavity surfaces. Thereby any possible thermal bridges at the boundary between inner cavity surface and insulating material are eliminated. If there are any voids left without insulating material at the inner cavity surface, such voids will have a detrimental effect on the insulation value of the brick. Similarly a possible extra layer separating the insulating material and the inner cavity surfaces as seen in the prior art may also have a negative effect on the insulation value of the brick. Further thermal bridges may not only reduce the insulating properties of the brick, but also give rise to problems with condensation etc.

Aerogels are known to have extraordinary insulating properties (9-22 mW/m·K), but at a high cost. Fumed silica and precipitated silica have lower insulating properties (approximately 22-23 mW/m*K), but at a lower price.

In the present context aerogel should be understood as any of the dried gel products, commonly known as aerogels, xerogels and cryogels. These products are known to have excellent insulating properties, owing to their very high surface areas, high porosity and relatively large pore volume. They are manufactured by gelling a flowable sol-gel solution and then removing the liquid from the gel in a manner that does not destroy the pores of the gel.

Depending on the drying conditions, aerogels, xerogels or cryogels can be made. Where the wet gel is dried at above the critical point of the liquid, there is no capillary pressure and therefore relatively little shrinkage as the liquid is removed. The product of such a process is very highly porous and is known as an aerogel. On the other hand, if the gel is dried by evaporation under subcritical conditions, the resulting product is a xerogel composite. Although shrinkage is unhindered in the production of a xerogel, the material usually retains a very high porosity and a large surface area in combination with a very small pore size.

When the gel is dried in a freeze-drying process, a cryogel is obtained. These conventional aerogel, xerogel and cryogel products, although good insulators, are fragile, susceptible to cracking and require a long processing time.

The term aerogel should also be interpreted as aerogel, xerogel or cryogel products, which additionally comprise a matrix of fibres, the matrix serving to reinforce the material, thereby providing high-strength products. These materials are known as aerogel, xerogel and cryogel matrix composites and are commonly produced in the form of mats, which are typically manufactured by impregnating the reinforcing fibres with a flowable sol-gel solution, gelling and then removing the liquid from the gel in a manner that does not destroy the pores of the gel. Supercritical drying, subcritical drying and freeze-drying result respectively in aerogel, xerogel and cryogel matrix composites.

Aerogels may have a thermal conductivity (λ-value) of e.g. 9-22 mW/m·K, whereas mineral wool may have a thermal conductivity (λ-value) of e.g. 30-40 mW/m·K, so with addition of aerogels to bricks it is possible to achieve better insulation properties of the building bricks. For comparison perlite will have a thermal conductivity (λ-value) of 45-60 mW/m·K.

The ratio of mineral fibres to silica-based thermal insulator in the insulating filling may be chosen for the particular use of the brick and the demands for insulation and/or physical properties etc. However it is preferred that the insulating filling comprises an amount of silica-based thermal insulator in the interval of 10-95 weight-% in relation to total weight of the insulating filling, which provides a suitable balance of cost and insulation properties. With a high ratio of silica-based thermal insulator the insulation properties will be better, but cost will rise, whereas a low ratio will provide less favourable insulation properties, but at a lower cost. With a high amount of silica-based thermal insulator the insulating filling will have relatively low strength, so for practical reasons the amount of silica-based thermal insulator will often be limited to below 80 weight-%, and in some applications even below 70 weight-%. On the other hand the insulation properties of the filling will often indicate that the amount of silica-based thermal insulator should be above 10 weight-%, often above 30 weight-%, and for some applications above 60 weight-% depending on the demands.

The insulating filling may be provided as loose fill material, such as in particulate or granulate form, which may have some advantages, such as easy filling by pouring or pumping, which may easily be automated. Further having insulating material as loose fill material may have an advantage in low amount of waste, e.g. as potential trim-loss is avoided. However it is presently preferred to provide the insulating filling in the form of a substantially consolidated insulating element. By consolidated should be understood non-loose, whereas the term should not in this context be used for interpreting of the insulating element as dense or un-flexible. By providing the insulating filling in the form of an element is achieved that no loose insulating material will fall out of the cavities, and further no additional bonding or encapsulating agent is needed to avoid insulating material falling out of the cavities of the brick.

The insulating element may be sized to the corresponding cavity of the brick to provide a loose fit, which will enable easy fitting of the element in the cavity. According to an embodiment, however, the size of the insulating element is adapted for a tight fit in the corresponding cavity. This is a particularly simple and cost effective way of anchoring the element in the cavity of the brick. A further advantage is that the insulation and fire properties of the brick are not influenced by any additional adhesive or binder for bonding the insulating element to the brick. The insulating element can be adapted to be flexible or compressible enough to be squeezed into the cavities and expand to fill the entire cavity. The insulating element will hence be held in place in the cavity by friction between the insulating element and the inner cavity surfaces, even while the bricks have to be cut to size on site.

The insulating filling may be a silica-based thermal insulator composite with mineral fibres e.g. for reinforcing purposes. Alternatively or supplementary the insulating filling may comprise mineral wool, such as glass wool, stone wool or slag wool. Mineral wool is in itself insulating, and further mineral wool has distinct acoustic insulation properties. By having an insulating filling comprising a combination of mineral wool and a silica-based thermal insulator, the resulting insulating filling will have improved acoustic properties as the acoustic properties of mineral wool and silica-based thermal insulators differ, so a synergistic effect is achieved in that both high and low frequencies are absorbed in the insulating material. Further the intrinsic compressibility of mineral wool may in some embodiments be beneficial, e.g. to provide easy fitting in the cavities, and further expansion for the insulating filling to fill the entire cavity.

Glass wool is often produced in a process in which raw materials for glass production and/or recycled glass are melted in e.g. an electric furnace. Melting takes place at temperatures around 700 °C, and the melt is led to a spinner cup with a plurality of small holes in the periphery, whereby fibres are drawn from the melt exiting the holes. The fibres are collected as wool having a relatively laminar build-up of fibres. A binder is normally used to bind the fibres of the wool.

Stone wool is often produced in a process in which raw materials are melted in a cupola furnace using coke as the energy source. The melt, having a temperature of around 1,400 °C, is led to a system of spinner wheels, and droplets of melt are thrown off the surface of the spinner wheels and dragging fibres as a tail. The fibres are collected as wool having chaotic orientation of the fibres. A binder is normally used to bind the fibres of the wool. Due to the chaotic orientation of the fibres stone wool is resilient by nature and is able to withstand compression. After collection the wool is often compressed and the binder is cured in a curing oven at elevated temperatures.

The silica-based thermal insulator may be provided in any shape or form, such as is monolithic, i.e. composed of one piece, or silica-based thermal insulator particles with a diameter which is smaller than the diameter of the particles that are joined by a suitable binder and/or compressed to form a larger particle. According to an embodiment, however, the silica-based thermal insulator is on particulate form, preferably with a weight average particle diameter in the interval of 1 to 10 mm, such as 5 mm. Particles are very versatile, and such particles may be added to mineral wool, e.g. during production of the mineral wool. Alternatively the particles may be added to insulating filling in situ. The size of particles will depend on the use to which the material is put. In order to achieve a high level of stability, the particles should not be too large, as this would provide a coarse granulate.

A binder may be added to the insulating filling if considered advantageous. The binder may be organic or inorganic. An example of an inorganic binder is water glass, which has good fire properties.

The brick may comprise a single cavity, but according to an embodiment the brick comprises a plurality of cavities, and all cavities are filled with insulating filling. Hereby a high strength brick with high insulation value is provided. To provide high strength the brick should be as massive as possible, whereas to provide good insulation value the brick should be filled with as much insulation material as possible.

According to an embodiment the concentration of silica-based thermal insulator is higher at a centre portion of the insulating filling, whereby the somewhat more delicate and high-cost silica-based thermal insulator is protected by the mineral fibres, both with respect to damages from handling and installation, and fire properties. Typically silica-based thermal insulator will start melting or shrinking at temperatures well below 1,000 °C, and thereby loose some of the insulation properties, whereas mineral fibres will stand higher temperatures. Stone fibres are the type of mineral fibres which has the best fire resistance and hence capable of withstanding the highest temperatures, such as 1,000 °C. Therefore stone fibres are a preferred type of mineral fibres when fire properties are important. Potential dust problems during production and handling due to silica-based thermal insulator particles may further be minimized.

In an alternative embodiment, the concentration of mineral wool is higher at a centre portion of the insulating filling, which in some applications may provide a beneficial effect on acoustic properties of the brick.

The two insulating materials making up the insulating filling may be arranged in any suitable way, but according to an embodiment the insulating element is made up of layers. Hereby the insulating element may be produced in a simple and efficient way, as the individual materials may be produced separately and joined at any convenient point in time, such as shortly before installation of the insulation in the brick.

According to an alternative embodiment the insulating element is a substantially homogeneous blend of mineral wool and silica-based thermal insulator. This embodiment has the advantage that the insulating element is an integral product containing both mineral wool and silica-based thermal insulator as a mixture, so that the element can be produced in large dimensions and sized for the application. Hereby production is simplified, in that no special elements for special applications is needed, and further the need and requirement for stocks is reduced. Further with a homogeneous blend of mineral wool and silica-based thermal insulator the risk of incorrect mounting of different layers is eliminated.

The mineral wool may have any suitable density, which will often be a compromise between insulation properties, cost, and ease of handling. According to an embodiment the mineral wool may have a density in the interval of 8 to 150 kg/m³. The low limit of 8 kg/m³ is a very light mineral wool, which will result in a low cost because the amount of material in the mineral wool is low, and further such wool is very compressible and hence the cost of transport of such light and compressible wool is low. On the other hand the high limit of 150 kg/m³ is a very strong mineral wool, which will contribute to the strength of the resulting brick, and workability is easy. In most practical circumstances a density in the interval of 25-75 kg/m³ will be suitable, and will provide mineral wool with favourable insulation properties and balanced cost and mechanical properties. A density of around 55 kg/m³ is considered the most promising, as this value is close to the optimum with regard to thermal conductivity, while also relatively light and compressible.

The brick could be any kind of building brick made of any kind of material, e.g. burnt clay, concrete, cellular concrete etc. According to an embodiment the structural body is made of mainly lime (CaO) and sand (SiO₂), resulting in a so-called sand-lime brick. The production method of these bricks will provide the advantage that curing of the bricks may take place in an autoclave at relatively low temperatures of around 200°C. Thereby it is possible to arrange the insulating filling in the cavity of the brick before curing of the brick, which may facilitate cost efficient production.

The invention also relates to a method for providing an insulated building brick, said method comprising the steps of providing a structural body having at least one cavity with inner cavity surfaces, providing an insulating filling comprising mineral fibres and at least one silica-based thermal insulator selected from the group consisting of aerogel, fumed silica and precipitated silica, and arranging the insulating filling in the cavity in direct contact with the inner cavity surfaces.

With this method a brick having high insulation value can be produced effectively.

According to an embodiment the insulating filling is a loose fill material, and the step of arranging the insulating filling takes place by pumping the filling into the cavity. This method is particularly suited for mass production at low cost.

According to an alternative embodiment the insulating filling is provided by mixing the silica-based thermal insulator with mineral wool. Hereby the insulating filling will be an integral product, which will facilitate mounting of the insulating filling in the cavities of the brick, whereby production cost will be low. The mixing may take place at production of the mineral wool, or at any later time.

The brick could have any suitable dimension as would be understood by the skilled person.

The invention will be described in more detail in the following by way of example and with reference to the schematic drawings in which
Figure 1 is a perspective view of a prior art insulated building brick,
Figure 2 is a longitudinal section of the building brick in Fig. 1,
Figure 3 depicts an insulated building brick according to the invention,
Figure 4 is a perspective view of an insulating element according to the invention,
Figure 5 is a perspective view of an alternative insulating element, and
Fig. 6 is a top view of an alternative building brick.

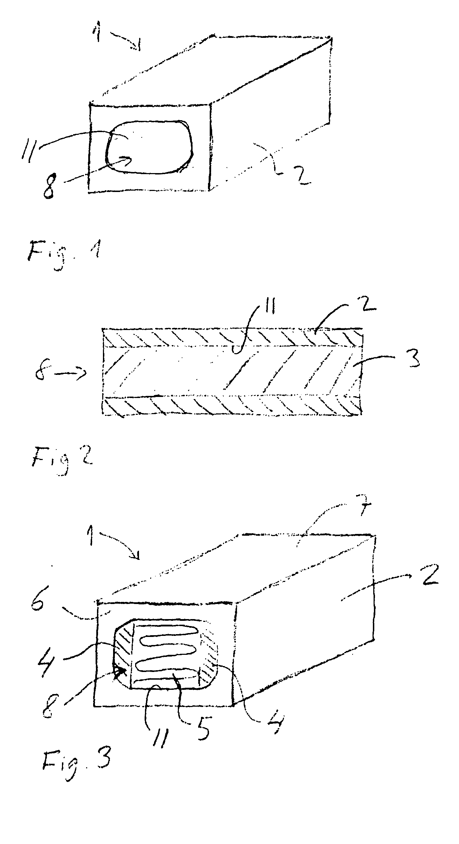

The prior art insulated brick 1 shown in Figs. 1 and 2 comprises a structural body 2 with a cavity 8 having an inner cavity surface 11. In the cavity an insulating filling 3 is arranged. The structural body 2 of this prior art insulated brick is a traditional building brick made of burnt clay. The insulating material of the insulating filling 3 in this prior art is for example glass wool.

Fig. 3 illustrates an embodiment of the invention, namely an insulated brick 1 comprising a structural body 2 with a cavity 8 having an inner inner cavity surface 11. In the present example the cavity 8 is a through hole penetrating the structural body from one end face 6 to the other, so the structural body is hollow with a shell. This is a very simple example to illustrate the principle of the invention, and the skilled person would immediately realize the possibility of other embodiments. Cavities could for example be a recess or a blind hole of any suitable size. It is likewise conceivable, and often preferred, to have the cavities directed from a main face, e.g. top face 7 or bottom face, or to have cavities in one or both end faces and one or more main faces.

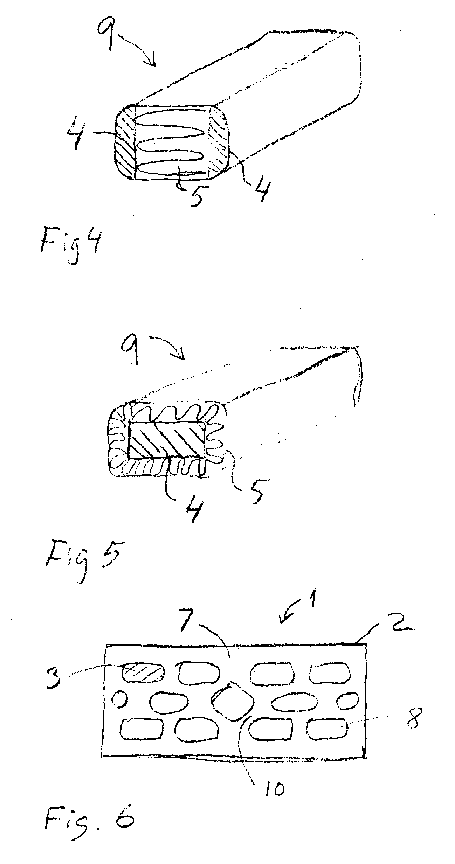

The cavity 8 is filled with an insulating filling 3 comprising mineral wool 5 and silica-based thermal insulator 4. The insulating filling 3 is in direct contact with the inner cavity surface 8. The insulating filling 3 may be provided as an insulating element 9 comprising a central strip of mineral wool 5 and side strips of silica-based thermal insulator 4 as shown in Fig. 4.

Alternatively the insulating material may be provided as an insulating element 9 comprising a central strip of silica-based thermal insulator 4, surrounded by a layer of mineral wool 5, as can be seen in Fig. 5. The layer of mineral wool 5 may be bonded to the central strip of silica-based thermal insulator 4 by any suitable glue or adhesive, stiching etc. if this is considered advantageous for easy handling of the insulating element 9.

Fig. 6 is a top view of an alternative insulated building brick 1 according to the invention. The brick 1 comprises a structural body 2 with a number of cavities 8 in the form of through-holes. The holes are filled with a core 3 of insulating material. As can be seen the holes are mutually off-set, so the effect of thermal bridges formed by walls 10 of the structural body 2 will be minimized in that the distance travelled by the heat flux will be as long as possible. The walls 10 dividing the cavities 8 should be as thin as possible to minimize thermal bridges.

The insulating filling 3 may be flush with the face of the structural body 2. Alternatively the insulating filling 3 may extend beyond the face of the structural body 2 (not shown). Thereby the insulating filing 3 may provide a beneficial insulating effect on any joints between adjacent bricks 1. Resiliency of the insulating filing 3 will normally allow the filling to adapt to pressure, whereby the risk of voids without any insulating filling at the openings of the cavities is eliminated or minimized.

Alternatively the insulating filling 3 may be sealed with a suitable sealant to provide an end cap at the openings of the cavities 8. This may be beneficial in some embodiments, especially if a relatively loose filling material is used, as the risk of loose filling material leaving the cavity will be eliminated.

## Claims

1. A thermally insulated building brick (1), which brick comprises a structural body (2) with at least one cavity (8) with inner cavity surfaces (11) and a thermally insulating filling (3) arranged in the cavity, **characterized in that** the insulating filling (3) comprises mineral fibres and at least one silica-based thermal insulator (4) selected from the group consisting of aerogel, fumed silica and precipitated silica, said insulating filling being arranged to be in direct contact with the inner cavity surfaces (11).

2. A thermally insulated building brick (1) according to claim 1, wherein the insulating filling (3) comprises an amount of silica-based thermal insulator in the interval of 10-95 weight-%.

3. A thermally insulated building brick (1) according to claim 1 or 2, wherein the insulating filling (3) is provided in the form of a substantially consolidated insulating element (9).

4. A thermally insulated building brick (1) according to claim 3, wherein the size of the insulating element (9) is adapted for a tight fit in the cavity (8).

5. A thermally insulated building brick (1) according to any one of the claims above, wherein the insulating filling (3) comprises mineral wool, such as glass wool, stone wool or slag wool.

6. A thermally insulated building brick (1) according to any one of the claims above, wherein the silica-based thermal insulator is in particulate form, preferably with an average particle diameter in the interval of 1 to 10 mm, such as 5 mm.

7. A thermally insulated building brick (1) according to any one of the claims above, wherein the insulating filling (3) further comprises a binder, preferably an inorganic binder, such as water glass.

8. A thermally insulated building brick (1) according to any one of the claims above, wherein the brick (1) comprises a plurality of cavities (8), and all cavities are filled with insulating filling (3).

9. A thermally insulated building brick (1) according to any one of the claims above, wherein the concentration of silica-based thermal insulator is higher at a centre portion of the insulating filling (3).

10. A thermally insulated building brick (1) according to claim 5, wherein the concentration of mineral wool is higher at a centre portion of the insulating element.

11. A thermally insulated building brick (1) according to claim 3, wherein the insulating element (9) is made up of layers.

12. A thermally insulated building brick (1) according to claim 3, wherein the insulating element (3) is a substantially homogeneous blend of mineral wool and silica-based thermal insulator.

13. A thermally insulated building brick (1) according to claim 5 or 12, said mineral wool having a density in the interval of 8 to 150 kg/m³.

14. A thermally insulated building brick (1) according to any one of the claims above, wherein the structural body (2) is a sand-lime brick.

15. Method for providing a thermally insulated building brick (1), said method comprising the steps of:
providing a structural body (2) having at least one cavity (8) with inner cavity surfaces (11),
providing an insulating filling (3) comprising mineral fibres and at least one silica-based thermal insulator selected from the group consisting of aerogel, fumed silica and precipitated silica,
arranging the insulating filling (3) in the cavity (8) in direct contact with the inner cavity surfaces (11).

16. Method according to claim 15, wherein the insulating filling (3) is a loose fill material, and the step of arranging the insulating filling takes place by pumping the filling into the cavity (8).

17. Method according to claim 15 or 16, wherein the insulating filling (3) is provided by mixing the silica-based thermal insulator with mineral wool.
